# EUROPÄISCHE PATENTSCHRIFT

(11) **EP 2 381 136 B1**
(45) Veröffentlichungstag und Bekanntmachung des Hinweises auf die Patenterteilung: **19.12.2012**
(21) Anmeldenummer: 11002194.6
(22) Anmeldetag: 17.03.2011
(51) Int. Cl.: F16H 55/06, F16H 55/17, B29D 15/00, B29C 45/14

(54) **Welle mit einem stirnseitig angegossenen Zahnrad und Verfahren zum Herstellen einer solchen Welle**
Shaft with a gear wheel cast on the front and method for producing such a shaft
Arbre doté d'une roue dentée coulée du côté frontal et procédé de fabrication d'un tel arbre

(30) Priorität: 22.04.2010 DE 102010018079
(43) Veröffentlichungstag der Anmeldung: 26.10.2011
(73) Patentinhaber: IMS Gear GmbH, 78166 Donaueschingen (DE)
(72) Erfinder: Oberle, Stephan, 78050 Villingen (DE); Schilling, Bernd, 79771 Klettgau (DE); Probst, Uwe, 78359 Orsingen-Nenzingen (DE); Bernhard, Markus, 78359 Nenzingen (DE)
(74) Vertreter: Patentanwälte Westphal, Mussgnug & Partner

(56) Entgegenhaltungen:
- EP-A1- 1 777 439
- DE-A1- 2 228 572
- DE-A1- 3 244 621
- JP-U- H0 475 266

## Beschreibung

Die Erfindung bezieht sich auf eine Vorrichtung mit einem Zahnrad und einer Welle gemäß dem Oberbegriff des Patentanspruchs 1 und auf ein Verfahren zum Herstellen einer solchen Welle.

Die De 32 44 621 A1 wird als nächsliegender Stand der Technik gegenüber den unabhängigen Ansprüchen 1 und 6 angesehen.

Andere Vorrichtungen sind z.B. aus DE 22 28 572 A1 und JP -H04-75266 U bekannt.

Beispielsweise im Bereich von Servolenkungen sind sogenannte EPAS-Zahnräder (EPAS: Electric Power Assisted Steering / mittels elektrischer Leistung unterstützte Steuerung) bekannt, die auf Wellen befestigt werden. Derartige Zahnräder weisen einen Ring auf, welcher beispielsweise mit einer großen Metallnabe verklebt wird. Anschließend wird ein Zahnkranz spanend verzahnt in der Außenseite des Rings ausgebildet. Alternativ sind Zahnräder bekannt, bei denen eine Zahnradkontur direkt an eine große Stahlnabe angespritzt wird.

Unter einer großen Stahlnabe oder Metallnabe ist dabei eine Nabe zu verstehen, welche größer als ein halber Durchmesser des derart ausgebildeten Zahnrads ist. Solche Naben können schließlich auf Wellen angeordnet werden, insbesondere auf bzw. benachbart zu den Stirnseiten der Wellen.

Beispielsweise kann ein solches Zahnrad gemäß EP 1 777 439 A1 mit einem Außenteil, einem Einlageteil und mit einem Verbindungsteil zum formschlüssigen Verbinden des Außenteils und des Einlageteils ausgebildet sein, wobei das Verbindungsteil aus zwischen das Außenteil und das Einlageteil gegossenem Material besteht. Das Einlageteil ist beispielsweise eine Nabe zum Anordnen auf einer Welle oder einem Wellenzapfen.

Außerdem ist es bekannt, Getrieberäder direkt auf Wellen aufzuspritzen, also unter Verzicht auf oben genannte Naben. Ein entsprechendes Verfahren zum Herstellen eines Getrieberades auf einer Welle ist der DE 10 2004 061 090 A1 zu entnehmen. Bei solchen Getrieberädern handelt es sich jedoch nicht um oben genannte EPAS-Zahnräder.

Die Aufgabe der Erfindung besteht darin, ein EPAS-Zahnrad weiter zu vereinfachen und zugehörige Herstellungsprozesse, insbesondere die Montage eines EPAS-Zahnrades auf einer Welle, kostengünstiger zu gestalten und dabei gleichzeitig den Bauraum zu verringern.

Diese Aufgabe wird durch eine Vorrichtung mit den Merkmalen des Patentanspruchs 1 bzw. durch ein Verfahren zum Herstellen einer Welle mit den Merkmalen des Patentanspruchs 6 gelöst.

Vorteilhafte Ausgestaltungen sind Gegenstand von abhängigen Ansprüchen.

Die Welle des erfindungsgemäßen Vorrichtung hat entlang ihrer Rotationsachse einander gegenüberliegend zwei Stirnseiten. Angrenzend an wenigstens eine der Stirnseiten weist die Welle einen axialen Bereich auf, in dem ein Zahnrad, insbesondere ein EPAS-Zahnrad, koaxial zur Welle angeordnet ist. Erfindungsgemäß überragt das Zahnrad die Welle stirnseitig, sodass der axiale Bereich der Welle kleiner ist als die axiale Breite des Zahnrades.

Das Zahnrad weist - von der radial innen aufgenommenen Welle nach radial außen gesehen - ein Verbindungsteil mit einer zentralen Aufnahme für die Welle und ein Außenteil mit Zähnen auf. Die Zähne weisen nach radial außen und sind über den Umfang des Außenteils verteilt angeordnet. Das Verbindungsteil ist unmittelbar zwischen die Welle und das Außenteil gegossen. Dies geschieht bevorzugt mit einem Zentralanguss, insbesondere mit einem Schirmanguss.

Das Verbindungsteil deckt die Welle stirnseitig, d.h. auf mindestens einer der Stirnseiten, mit einer Kappe ab. Die Kappe kann als Bestandteil des Verbindungsteils angesehen werden, weil die Kappe mit dem Verbindungsteil durchgehend aus einem Guss geformt sind. Selbst wenn nicht das gesamte Zahnrad die Welle axial über die entsprechende Stirnseite der Welle hinaus überragt, so doch zumindest das Verbindungsteil in einem zentralen Bereich mit der angeformten Kappe.

Die Stirnseite der Welle ist gemäß einer vorteilhaften Ausführungsform vollständig abgedeckt.

Somit ist vorteilhafterweise eine die jeweilige Stirnseite der Welle abdeckende Kappe gestaltet, die einstückig während des Zentralangusses mit dem Verbindungsteil herstellbar ist. Eine an das Herstellungsverfahren anschließende, spanende Entfernung eines Angusses wird hierdurch eingespart, da der Anguss als Kappe erhalten bleiben kann. Es ergeben sich besonders kostengünstige Herstellungsverfahren.

Der an der Welle verbleibende Anguss in Gestalt der Kappe schützt die Stirnseite der Welle vor Verschmutzungen und Korrosion.

Ein Aufpressen eines herkömmlichen Schraubrades bzw. einer Nabe mit einem angeformten Zahnrad auf eine Welle ist oftmals mit Ungenauigkeiten bezüglich des resultierenden Rundlaufs des Zahnrades verbunden. Durch das erfindungsgemäße direkte Angießen, insbesondere Umspritzen mit Kunststoff, der Welle kann eine optimale Rundheit des Zahnrades mit Bezug zur Welle erzielt werden.

Der für das Herstellungsverfahren vorzugsweise verwendete Zentralanguss kann in einer entsprechenden Gussapparatur Platz sparend über das freistehende Wellenende geführt werden.

Gemäß einer vorteilhaften Ausführungsform weist das Verbindungsteil in einem zentralen Bereich, entlang der Rotationsachse benachbart zueinander,
- einer axialen Mitte der Welle zugewandt einen Aufnahmeabschnitt und
- der axialen Mitte der Welle abgewandt einen Angussabschnitt auf.

Das Verbindungsteil lagert die Welle in dem Aufnahmeabschnitt. Alternativ kann die Welle in dem Aufnahmeabschnitt ein Lager für das Zahnrad tragen. In dem Angussabschnitt ist das Verbindungsteil - wie oben bereits beschrieben - als Kappe ausgeführt und deckt die jeweilige Stirnseite der Welle ab.

Die Aufnahme des stirnseitigen Abschnitts der Welle im zentralen Bereich und die stirnseitige Abdeckung der Welle durch eine Kappe wird erfindungsgemäß durch Umspritzen mit Kunststoff erreicht.

Gemäß einer vorteilhaften Ausführungsform steht das Verbindungsteil in dem Aufnahmeabschnitt in direktem Kontakt mit der rotierbaren Welle, sodass die Welle axial, radial und drehfest gelagert ist. Dazu kann die Welle in dem axialen Bereich, in dem das Zahnrad angeordnet ist, geriffelt ausgestaltet sein, insbesondere Erhebungen und Vertiefungen aufweisen. Außerdem sind in vorteilhaften Ausführungsformen umlaufende Nuten oder umlaufende Kragen auf der Welle zur Aufnahme gegossenen Materials in oder zum Abstützen des Zahnrades auf der Welle vorgesehen. Mit umlaufenden Nuten ist neben einer Abstützung in axialer Richtung auch ein besonders vorteilhafter Materialfluss ermöglicht.

In einer besonders vorteilhaften Ausführungsform ist eine in axialer Richtung der Welle abgewandte, über einen zentralen Bereich in radialer Richtung hinaus geschlossene Oberfläche des Verbindungsteils vorhanden. Sie verläuft im Wesentlichen parallel oder genau parallel zu der jeweiligen Stirnseite der Welle, sodass die Kappe die Stirnseite radial innen im Verbindungsteil als Scheibe verschließt. In dem zentralen Bereich fließt dazu während des Herstellungsverfahrens zentral angegossenes Material in radialer Richtung nach außen, quasi parallel zur Stirnseite, zum Außenteil hin. Somit ist eine besonders kompakte Bauweise des stirnseitig geschlossenen Zahnrades erreicht.

Eine der jeweiligen Stirnseite der Welle abgewandte Oberfläche der Kappe lässt sich alternativ zu einer ebenen Gestaltung auch geriffelt, gemustert, konkav oder konvex gestalten.

Ein Verfahren zum Herstellen einer solchen Welle mit einem solchen stirnseitig auf der Welle anzuordnenden Zahnrad weist mindestens die aufeinanderfolgenden Verfahrensschritte a) bis c) auf:
a) Bereitstellen der Welle und des Außenteils des Zahnrades,
b) koaxiales Ausrichten der Welle und des Außenteils zueinander, sodass sie eine gemeinsame Rotationsachse aufweisen, und
c) zentrales Angießen des Verbindungsteils des Zahnrades zwischen das Außenteil und die Welle in einem stirnseitigen, axialen Abschnitt der Welle, mit einem Anguss, der sich über die Stirnseite hinaus erstreckt. Der zunächst in axialer Richtung ausgerichtete Anguss trifft dabei auf die Stirnseite der Welle auf. Es folgt gemäß einer Prallströmung des gegossenen Materials eine Verteilung in radialer Richtung. Besonders Vorteilhaft wird die Welle stirnseitig mit Kunststoff umspritzt. Das Material dringt in den Bereich zwischen der Welle und dem Außenteil des Zahnrades vor, sodass das Verbindungsteil entsteht. Dabei bleibt die Stirnseite mindestens teilweise durch das Material abgedeckt.

Durch dieses Verfahren ist ein stirnseitiges Zahnrad herstellbar, das die Stirnseite der Welle abdeckt. Besonders vorteilhaft ist ein Zentralanguss als kostengünstiges Herstellungsverfahren durchführbar, ohne dass Nachbearbeitungen nötig sind, weil der Anguss als Kappe erhalten bleibt.

Ein nachträgliches Abdrehen oder Abfräsen des Angusses wird eingespart.

In einer vorteilhaften Ausführungsform ist es zu Beginn des Verfahrens vorgesehen, ein zentrales, Loch in die jeweilige Stirnseite der Welle einzukerben. Bestehende Zentrierbohrungen in den Stirnseiten der Welle können genutzt werden. Zusätzlich können bestehende Zentrierbohrungen erweitert werden, bis das stirnseitige Loch die gewünschte Größe hat.

Bei zentralen Angussverfahren, insbesondere Schirmangussverfahren, bildet sich zwischen zwei Herstellungsansätzen in einer Düse der Guss- bzw. Spritzapparatur ein Pfropfen aus, insbesondere in Form eines Kegels. Der Pfropfen wird gemäß vorgeschlagenem Verfahren zu Beginn des Angießens aus der Düse in Richtung der Stirnseite gefördert. Dort - in dem Loch - wird der Pfropfen aufgefangen. Würde der Pfropfen statt aufgefangen zu werden mit einer Prallströmung radial nach außen in den Bereich zwischen die Welle und das Außenteil gefördert, würde der Pfropfen an anderer Stelle des Verbindungsteils zur Ruhe kommen und das spätere Gussteil schwächen. Um dies zu verhindern, ist das zentrale, stirnseitige Loch besonders vorteilhaft als Pfropfenfänger ausgebildet. Als solcher ist er der Form des Pfropfens angepasst, um diesen sicher aufnehmen zu können.

Nachfolgend werden zwei Ausführungsbeispielen anhand von Zeichnungen näher erläutert. Es zeigen:
- Fig. 1: eine schematische Darstellung einer Welle mit stirnseitigem Zahnrad gemäß einem nicht zur Erfindung gehörendem Ausführungsbeispiel, wobei das Zahnrad im Axialschnitt dargestellt ist, und
- Fig. 2: eine schematische Darstellung einer Welle mit einem stirnseitigen Zahnrad gemäß einem Ausführungsbeispiel nach der Erfindung, wobei das Zahnrad in einem Axialschnitt dargestellt ist.

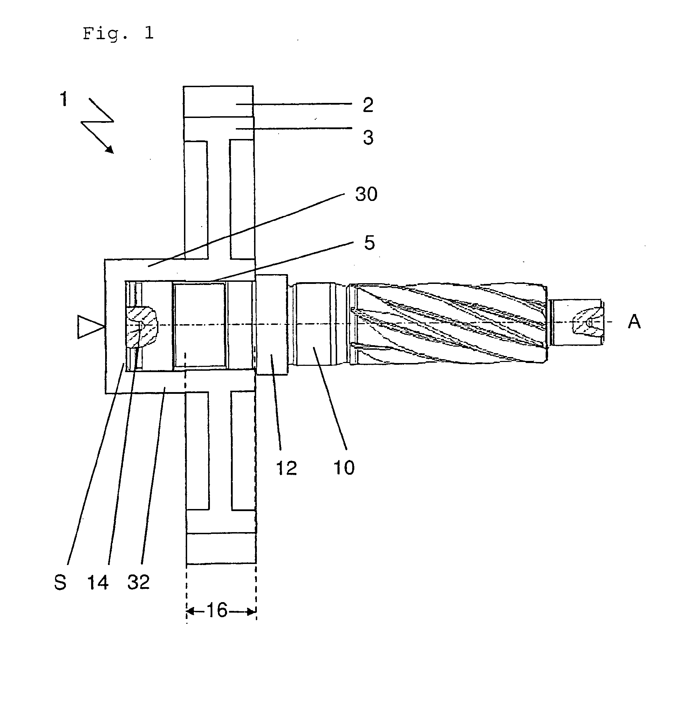

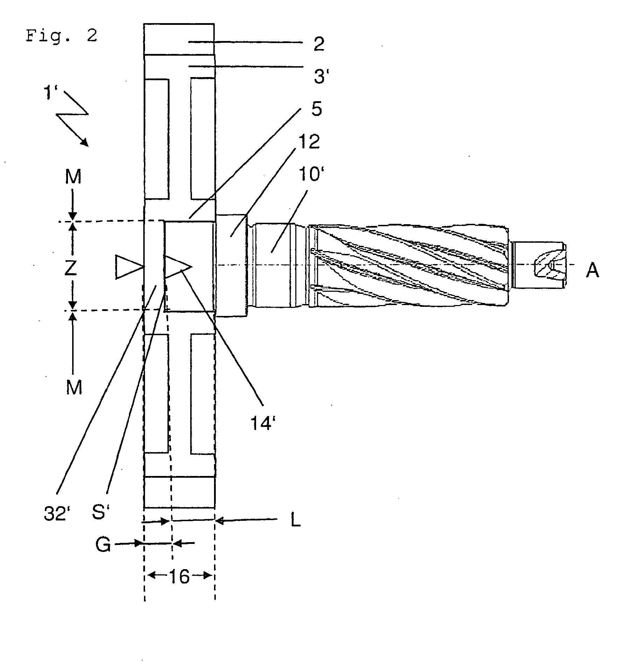

Die Figuren 1 und 2 zeigen eine Welle 10, 10' mit einer Stirnseite S, S'. In einem axialen Bereich 16 ist auf der Welle 10, 10' ein Zahnrad 1, 1' mit Bezug zu der Stirnseite S, S' angeornet. Die Stirnseite S, S' kann sich innerhalb des axialen Abschnittes 16 befinden oder außerhalb, axial beabstandet von dem axialen Bereich 16, befinden. Die Welle 10, 10' durchsetzt das Zahnrad 1, 1' somit vollständig oder teilweise.

Gleiche oder wirkungsgleiche Teile sind mit gleichen Bezugszeichen bezeichnet. In den beiden Figuren sind zur besseren Übersicht nicht alle Bezugszeichen eingetragen.

Entsprechend der vielfältigen Anordnungsmöglichkeiten sind beispielhaft in Figur 1 ein erstes Ausführungsbeispiel in Gestalt der das Zahnrades 1 vollständig durchsetzenden Welle 10 und in Figur 2 ein zweites Ausführungsbeispiel in Gestalt der das Zahnrad 1' teilweise durchsetzenden Welle 10' dargestellt.

In Figur 1 ist das Zahnrad 1 schematisch als Axialschnitt auf der perspektivisch dargestellten Welle 10 skizziert. Von radial innen nach radial außen gesehen weist das Zahnrad 1 ein Verbindungsteil 3 und ein Außenteil 2 auf. Das Verbindungsteil 3 hat eine zentrale Aufnahme 5 für die Welle 10. Das Außenteil 2 weist über seinen Umfang verteilt Zähne auf, die in Figur 1 nicht näher dargestellt sind.

Das Verbindungsteil 3 ist unmittelbar zwischen die Welle 10 und das Außenteil 2 gegossen, insbesondere aus Kunststoff. Eine Verstärkung des Materials des Verbindungsteils 3 mit Fasern, insbesondere Glasfasern, ist möglich. Ein zentraler Anguss in Richtung der Rotationsachse A ist in Figur 1 mit einem stirnseitigen Dreieck angedeutet. Die Form eines Dreiecks ist gewählt, weil der Austritt einer entsprechenden Düse in der Regel eine solche Kegelform aufweist. Der Guss bzw. das angegossene Material prallt auf die Stirnseite S der Welle 10 auf und wird parallel zur Stirnseite S in alle Radialrichtungen nach radial außen in Richtung des Außenteils verteilt.

Ein Zentralanguss, wie er durch das Dreieck angedeutet ist, wird vorzugsweise durch einen Schirmanguss realisiert. Dazu ist eine Spritzgussapparatur vorgesehen, in der das Außenteil 2 und die Welle 10 koaxial zueinander angeordnet sind und zentral in axialer Richtung auf die Welle zu geleitetes Material die Stirnseite S umfließt, bis das Material das Außenteil 2 erreicht.

In der Welle 10 ist stirnseitig ein Loch 14 vorhanden. Das Loch 14 ist als Zentrieraufnahme fertigungsbedingt in der Welle 10 vorgesehen oder nachträglich in die Stirnseite S der Welle 10 eingebracht, um einen Pfropfen aus der Gussapparatur aufzufangen.

Zwischen der Fertigung mehrerer Wellen 10 erkaltet Material in der Düse der Gussapparatur und bildet einen Pfropfen, dessen Form üblicherweise ebenfalls einem Kegel entspricht. Zu Beginn des Angießens des Verbindungsteils 3 wird dieser Pfropfen von dem Loch 14 gefangen und verbleibt in dem Loch, während im Anschluss an den Pfropfen austretendes Material in das Verbindungsteil 3 geleitet werden kann.

Ein nach dem Umspritzen der Welle 10 bzw. dem zentralen Anguss zurückbleibender Anguss 30 deckt die Stirnseite S der Welle 10 ab. Im Falle des ersten Ausführungsbeispiels ist somit durch den Anguss 30 eine U-förmige Kappe 32 entstanden, deren hülsenförmige Wandung parallel zur Rotationsachse A eine gewisse Distanz bis zu dem Bereich 16 überbrückt, in dem das eigentliche Zahnrad auf der Welle 10 sitzt.

Diese Kappe 32 würde üblicherweise in einem weiteren Verfahrensschritt entfernt werden. Dazu wäre die Welle 10 erneut in eine Drehmaschine einzuspannen, sodass dort die Kappe 32 bzw. der Anguss 30 abgedreht werden können mit dem Ergebnis, dass die Stirnseite S wieder frei liegen würde. Diese Nachbearbeitung wird durch die erfindungsgemäße Ausgestaltung der Kappe 32 vermieden.

Das zweite Ausführungsbeispiel gemäß Figur 2 weist ebenfalls eine Kappe 32' eines Verbindungsteils 3' auf, die in ähnlicher Art und Weise die Stirnseite S' der Welle 10' abdeckt. Die Welle 10' durchsetzt jedoch das Zahnrad 1' nur teilweise. Die Stirnseite befindet sich in Richtung entlang der Rotationsachse A somit innerhalb des Abschnitts 16. Das zweite Ausführungsbeispiel ist somit kompakter gestaltet, weil der Bauraum in axialer Richtung kleiner ist und es dennoch zu einer vollständigen Abdeckung der Stirnseite S' kommt.

Dazu ist die Kappe 32' des zweiten Ausführungsbeispiels im Unterschied zur Kappe 32 des ersten Ausführungsbeispiels nicht U-Förmig bzw. topfförmig sondern als Scheibe ausgebildet. Die Breite der Kappe 32' entspricht einem Teilabschnitt des Bereichs 16 und bestimmt einen minimalen Angussabschnitt G.

Auf den Angussabschnitt G folgt die Stirnseite S' und der sich innerhalb des Abschnitts 16 anschließende Aufnahmeabschnitt L.

Die Welle 10' weist in ihrer Stirnseite S' ebenfalls ein zentrales Loch 14' vergleichbar dem Loch 14 des ersten Ausführungsbeispieles auf. Der Auftreffpunkt des Angusses bzw. des oben erwähnten Propfens befindet sich allerdings im Falle des zweiten Ausführungsbeispiels innerhalb des Bereichs 16.

### Bezugszeichenliste

- 1, 1': Zahnrad
- 2: Außenteil
- 3, 3': Verbindungsteil
- 10, 10': Welle
- 12: Kragen
- 14, 14': Loch
- 16: Abschnitt
- 30: Anguss
- 32: Kappe
- A: Rotationsachse
- G: Angussabschnitt
- L: Aufnahmeabschnitt
- M: mittlerer Bereich
- S: Stirnseite
- Z: zentraler Bereich

## Patentansprüche

1. Vorrichtung mit einem Zahnrad (1') und einer zwei Stirnseiten (S') und eine Rotationsachse (A) aufweisenden Welle (10'), wobei die Welle (10') mindestens in einem axialen Bereich (16) angrenzend an wenigstens eine erste der Stirnseiten (S') das Zahnrad (1') mit gleicher Rotationsachse (A) aufweist, und wobei das Zahnrad (1') von radial innen nach radial außen gesehen
1.1 ein Verbindungsteil (3') mit einer zentralen Aufnahme (5) für die Welle (10') und
1.2 ein Außenteil (2) mit Zähnen aufweist, **dadurch gekennzeichnet, dass**
1.3 das Verbindungsteil (3') unmittelbar zwischen die Welle (10, 10') und das Außenteil (2) gegossen ist, dass
1.4 das Verbindungsteil (3') die Welle (10') in axialer Richtung überragt und die erste Stirnseite (S') abdeckt, dass
1.5 das Verbindungsteil (3') und das Außenteil (2) axial gleichlang und zueinander ausgerichtet sind, und dass
1.6 die Welle (10') das Zahnrad (1') in Axialrichtung gesehen nur teilweise durchsetzt.

2. Vorrichtung nach Anspruch 1,
**dadurch gekennzeichnet, dass** das Verbindungsteil (3') die Welle (10') in axialer Richtung überragt und die Stirnseite (S') vollständig abdeckt.

3. Vorrichtung nach einem der Ansprüche 1 oder 2,
**dadurch gekennzeichnet, dass** das Verbindungsteil (3') im Bereich der ersten Stirnseite (S') benachbart zueinander
3.1 einer axialen Mitte der Welle (10') zugewandt einen Aufnahmeabschnitt (L) und
3.2 der axialen Mitte der Welle (10') abgewandt einen Angussabschnitt (G) aufweist, wobei
3.3 das Verbindungsteil (3') die Welle (10') in dem Aufnahmeabschnitt (L) lagert und
3.4 das Verbindungsteil (3') in dem Angussabschnitt (G) als eine Kappe (32') ausgeführt ist, die die erste Stirnseite (S') abdeckt.

4. Vorrichtung nach Anspruch 3,
**dadurch gekennzeichnet, dass** die Kappe (32') senkrecht zur Rotationsachse (A) nach radial außen an einer äußeren Grenze eines zentralen Bereichs (Z), eben, insbesondere nahtlos, an einen radial mittleren Bereich (M) des Verbindungsteils (3') angrenzt, sodass eine der Welle (10') abgewandte, über den zentralen Bereich (Z) hinaus geschlossene Oberfläche des Verbindungsteils (3') vorhanden ist, die im wesentlichen parallel oder genau parallel zu der jeweiligen Stirnseite (S') verläuft.

5. Vorrichtung nach einem der vorangehenden Ansprüche,
**dadurch gekennzeichnet, dass** ein zentrales Loch (14') in der ersten Stirnseite (S') der Welle (10') angeordnet ist, insbesondere ein rotationssymmetrisches Loch mit Ausrichtung koaxial zur Rotationsachse (A).

6. Verfahren zum Herstellen einer Welle (10') mit einem in einem axialen Bereich (16) mindestens einer ersten Stirnseite (S') der Welle (10') angeordneten Zahnrad (1'), wobei das Zahnrad (1') von radial innen nach radial außen gesehen mindestens aus einem Verbindungsteil (3') und einem Außenteil (2) mit Zähnen aufgebaut ist, aufweisend die aufeinander folgenden Verfahrensschritte
a) Bereitstellen der Welle (10') und des Außenteils (2') ,
b) Ausrichten der Welle (10') und des Außenteils (2)zueinander, sodass ihre Rotationsachsen (A) zueinander identisch sind, und
c) zentrales Angießen des Verbindungsteils (3') in dem stirnseitigen, axialen Bereich (16) der Welle ( 10'), mit einem sich über die Stirnseite (S') hinaus erstreckenden Anguss, wobei durch den Anguss eingebrachtes Material in radialer Richtung zwischen das Außenteil (2) und die Welle (10') fließt und die Stirnseite (S') mindestens teilweise durch das Material abgedeckt bleibt, derart, dass das durch den Anguss eingebrachte Material in radialer Richtung innerhalb des axialen Bereiches (16) verbleibt, welcher durch die axiale Länge des Außenteils (2) vorgegeben ist.

7. Verfahren nach Anspruch 6,
**dadurch gekennzeichnet, dass** zu Beginn des Verfahrens ein Einkerben eines zentralen, stirnseitigen Loches (14') in die Welle (10') durchgeführt wird.

8. Verfahren nach Anspruch 7,
**dadurch gekennzeichnet, dass** das zentrale, stirnseitige Loch (14') als Pfropfenfänger der Form eines Pfropfens angepasst ist, der aus einer Düse einer Gussapparatur stammt und insbesondere kegelförmig ausgebildet ist.

9. Verfahren nach einem der Ansprüche 7 bis 8,
**dadurch gekennzeichnet, dass** das Verbindungsteil (3') mittels eines Schirmangusses hergestellt wird.

## Claims

1. An apparatus with a toothed wheel (1') and a shaft (10') having two end faces (S') and an axis of rotation (A), wherein the shaft (10') has the toothed wheel (1') with the same axis of rotation (A) at least in an axial region (16) adjacent to at least a first one of the end faces (S'), and wherein - as viewed from radially on the inside to radially outwards - the toothed wheel (1') has
1.1 a connecting part (3') with a central receiving means (5) for the shaft (10') and
1.2 an outer part (2) with teeth, **characterized in that**
1.3 the connecting part (3') is cast directly between the shaft (10, 10') and the outer part (2),
1.4 the connecting part (3') projects beyond the shaft (10') in the axial direction and covers the first end face (S'),
1.5 the connecting part (3') and the outer part (2) are the same length axially and are orientated towards each other, and
1.6 the shaft (10') passes through the toothed wheel (1') only in part as viewed in the axial direction.

2. An apparatus according to claim 1, **characterized in that** the connecting part (3') projects beyond the shaft (10') in the axial direction and covers the end face (S') completely.

3. An apparatus according to claims 1 or [sic] 2, **characterized in that** in the region of the first end face (S') the connecting part (3') has adjacent to each other
3.1 a receiving portion (L) facing an axial middle of the shaft (10') and
3.2 a sprue portion (G) facing away from the axial middle of the shaft (10'), wherein
3.3 the connecting part (3') supports the shaft (10') in the receiving portion (L), and
3.4 the connecting part (3') is designed in the sprue portion (G) in the form of a cap (32') which covers the first end face (S').

4. An apparatus according to claim 3, **characterized in that** the cap (32') adjoins a radially central region (M) of the connecting part (3') in a flat, and in particular seamless, manner at a right angle to the axis of rotation (A) radially on the outside of an external boundary of a central region (Z), so that a surface of the connecting part (3'), which faces away from the shaft (10') and is closed beyond the central region (Z) and which extends substantially parallel or exactly parallel to the respective end face (S'), is present.

5. An apparatus according to any one of the preceding claims, **characterized in that** a central perforation (14'), in particular a rotationally symmetrical perforation with an orientation coaxial with the axis of rotation (A), is situated in the first end face (S') of the shaft (10').

6. A method of producing a shaft (10') with a toothed wheel (1') arranged in an axial region (16) of at least one first end face (S') of the shaft (10'), wherein the toothed wheel (1') is formed at least from a connecting part (3') and an outer part (2) with teeth as viewed from radially on the inside to radially outwards, having the method steps following in succession
a) making available the shaft (10') and the outer part (2),
b) orientating the shaft (10') and the outer part (2) with respect to each other so that their axes of rotation (A) are identical to each other, and
c) casting the connecting part (3') centrally in the axial region (16) on the end face of the shaft (10'), with a sprue which extends beyond the end face (S'), wherein material introduced through the sprue flows in the radial direction between the outer part (2) and the shaft (10') and the end face (S') remains covered at least in part by the material in such a way that the material introduced through the sprue remains in the radial direction inside the axial region (16) which is pre-set by the axial length of the outer part (2).

7. A method according to claim 6, **characterized in that** at the start of the method a central perforation (14') is notched into the end face of the shaft (10').

8. A method according to claim 7, **characterized in that** the central perforation (14') on the end face is adapted as a stopper catcher to the shape of a stopper which originates from a nozzle of a casting appliance and, in particular, has a conical shape.

9. A method according to one of claims 7 to 8, **characterized in that** the connecting part (3') is produced by means of a screening sprue.

## Revendications

1. Dispositif comportant une roue dentée (1') et un arbre (10') comportant deux faces frontales (S') et un axe de rotation (A), l'arbre (10') recevant la roue dentée (1'), au moins dans une zone axiale (16) adjacente à au moins une première des faces frontales (S') avec le même axe de rotation (A), et, la roue dentée (1') comportant de sa partie radiale interne à sa partie radiale externe :
1.1 une partie de liaison (3') comportant un évidement central (5) de réception de l'arbre (10'), et
1.2 une partie externe (2) équipée de dents,
**caractérisé en ce que**
1.3 la partie de liaison (3') est coulée directement entre l'arbre (10') et la partie externe (2),
1.4 la partie de liaison (3') dépasse de l'arbre (10') en direction axiale et recouvre la première face frontale (S'),
1.5 la partie de liaison (3') et la partie externe (2) sont alignées et ont la même longueur axiale, et
1.6 l'arbre (10') ne traverse que partiellement la roue dentée (1') en direction axiale.

2. Dispositif conforme à la revendication 1,
**caractérisé en ce que**
la partie de liaison (3') dépasse de l'arbre (10') en direction axiale et recouvre complètement la face frontale (S').

3. Dispositif conforme à l'une des revendications 1 et 2,
**caractérisé en ce que**
la partie de liaison (3') comporte, dans la zone de la première face frontale (S') et au voisinage l'un de l'autre,
3.1 un tronçon de réception (L) tourné vers le centre axial de l'arbre (10'), et
3.2 un tronçon de tête de coulée (G) situé à l'opposé du centre axial de l'arbre (10'),
3.3 la partie de liaison (3') recevant l'arbre (10') dans le tronçon de réception (L), et
3.4 la partie de liaison (3') étant réalisée dans le tronçon de tête de coulée (G) sous la forme d'un capuchon (32') qui recouvre la première face frontale (S').

4. Disposition conforme à la revendication 3,
**caractérisé en ce que**
le capuchon (32') est contigu à une zone radiale médiane (M) de la partie de liaison (3') perpendiculairement à l'axe de rotation (A) au niveau d'une limite externe d'une zone centrale (Z) de façon plane et en particulier sans bavures de façon à définir une surface fermée de la partie de liaison (3') tournée à l'opposé de l'arbre (10') s'étendant au-delà de la zone centrale (Z), et dirigée essentiellement parallèlement ou exactement parallèlement à la face frontale (S') respective.

5. Disposition conforme à l'une des revendications précédentes,
**caractérisé en ce qu'**
un orifice central (14') est situé dans la première face frontale (S') de l'arbre (10'), en particulier un orifice présentant une symétrie de rotation dirigée coaxialement à l'axe de rotation (A).

6. Procédé d'obtention d'un arbre (10') avec une roue dentée (1') située dans une zone axiale (16) d'au moins une première face frontale (S') de cet arbre (10'), cette roue dentée (1') étant formée de sa partie radiale interne à sa partie radiale externe d'au moins une partie de liaison (3') et d'une partie externe (2) équipée de dents, comportant les étapes consistant à :
a) se procurer l'arbre (10') et la partie externe (2),
b) aligner l'arbre (10') et la partie externe (2), de sorte que leurs axes de rotation (A) soient identiques, et
c) effectuer une coulée médiane de la partie de liaison (3') dans la zone axiale (16) située côté frontal de l'arbre (10'), avec une tête de coulée s'étendant sur la face frontale (S'), au-delà de cette face le matériau apporté par la coulée s'écoulant en direction radiale entre la partie externe (2) et l'arbre (10'), et la face frontale (S') restant au moins partiellement recouverte par ce matériau de sorte que le matériau apporté par la coulée reste en direction radiale dans la zone axiale (16) qui est prédéfinie par la longueur axiale de la partie externe (2).

7. Procédé conforme à la revendication 6,
**caractérisé en ce qu'**
au début du procédé on entaille dans l'arbre (10') un orifice central (14') situé côté frontal.

8. Procédé conforme à la revendication 7,
**caractérisé en ce que**
l'orifice (14') frontal central est constitué par un collecteur de bouchon adapté à la forme d'un bouchon, provenant d'une buse d'un appareil de coulée et réalisé en particulier en forme de cône.

9. Procédé conforme à l'une des revendications 7 et 8,
**caractérisé en ce que**
la partie de liaison (3') est obtenue par coulée de protection.
